# EUROPEAN PATENT SPECIFICATION

(11) **EP 3 632 205 B1**
(45) Date of publication and mention of the grant of the patent: **17.03.2021**
(21) Application number: 19175847.3
(22) Date of filing: 22.05.2019
(51) Int. Cl.: A01K 97/12, A01K 97/10, F16B 7/00

(54) **QUICK RELEASE COUPLING DEVICE**
SCHNELL LÖSBARE KUPPLUNGSVORRICHTUNG
DISPOSITIF D'ACCOUPLEMENT RAPIDEMENT DÉMONTABLE

(43) Date of publication of application: 08.04.2020
(73) Proprietor: New Direction Tackle Ltd., Southampton SO15 1GA (GB)
(72) Inventor: Ferger, Benjamin, 35684 Dillenburg (DE); Yan, Ke, Ningbo Zhejiang (CN)
(74) Representative: Forresters IP LLP

(56) References cited:
- EP-A1- 2 527 668
- DE-U1-202009 006 063
- GB-A- 2 512 843

## Description

The present invention relates to a quick release coupling device for use with a bank stick or rod pod. Especially, the present invention relates to a quick release coupling device for coupling a fishing accessory, such as fish bite detector, to a bank stick or rod pod.

Fish bite detectors are well known in the art and are commonly used in carp fishing. Such detectors comprise an alarm which sounds upon detection of movement of a fishing line indicative of a fish bite. In use, fish bite detectors are mounted on bank sticks or rod pods. As such, fish bite detectors generally comprise a means for direct attachment to a bank stick or rod pod. Similarly, bank sticks generally comprise a means for direct attachment of a fishing accessory such as a fish bite detector. A rod pod may comprise more than one means for direct attachment of fishing accessories, so that more than one fish bite detector or other fishing accessory may be attached to the rod pod. Most commonly, bank sticks and rod pods comprise an internal screw thread or internal screw threads as attachment means, and fish bite detectors comprise a screw hole or external screw thread.

There are a number of disadvantages of direct attachment of fishing accessories, such as fish bite detectors, to bank sticks or rod pods.

Firstly, when attached directly, a fishing accessory is not spaced from the bank stick or rod pod. In the case of a fish bite detector, this can make it difficult for the user to access buttons, such as the on/off button, when the detector is attached to a bank stick or rod pod.

Secondly, repeated attachment and detachment of the fishing accessory to the rod pod or bank stick, over time, leads to wear and tear of the attachment means of the fishing accessory and/or the attachment means of the rod pod or bank stick. Wear and tear may result in less secure attachment of, or difficulties attaching, the fishing accessory to the bank stick or rod pod. Eventually, the user may have to replace the otherwise fully functioning bank stick, rod pod or fishing accessory as a result of wear and tear. In other words, direct attachment reduces the lifespan of rod pods, banks sticks and fishing accessories.

Finally, direct attachment of fishing accessories to bank sticks or rod pods, particularly by screwing the fish bite detector into the bank stick or rod pod, is time consuming, increasing the amount of time required to set up and pack away fishing equipment.

Accordingly, there exists a need for a means of quickly attaching and detaching fishing accessories, such as fish bite detectors, to and from bank sticks and rod pods, which reduces wear and tear of the bank stick or rod pod and/or fishing accessory, and spaces the fishing accessory from the bank stick or rod pod.

Quick release coupling devices for attachment of fish bite detectors to bank sticks or rod pods are known in the art. Such quick release coupling devices enable rapid and easy attachment and detachment of a fish bite detector to and from a bank stick or rod pod, reduce wear and tear of the attachment means of the fish bite detector and/or the attachment means of the bank stick or rod pod, and, in general, space the fish bite detector from the bank stick or rod pod.

Quick release coupling devices for use with bank sticks or rod pods known in the art generally comprise two portions: a first portion which is attachable to a fish bite detector, and a second portion which can be attached to a bank stick or rod pod. Most often, one of the two portions of the quick release coupling device comprises at least one spring loaded ball or pin, while the other portion comprises a corresponding at least one recess configured for receiving said at least one ball or pin. When the two portions of the coupling device are brought together, the at least one ball or pin snaps into the at least one recess, thereby resulting in coupling of the two portions. The two portions may be uncoupled by simply pulling the first portion from the second portion with sufficient force that retraction of the at least one ball or pin from the at least one recess occurs. Commonly, however, quick release coupling devices comprise an actuator manipulable by the user to cause retraction of the at least one ball or pin from the at least one recess and uncouple of the first and second portions.

It can be appreciated that having a coupling device in between a bank stick or rod pod and a fish bite detector generally spaces the fish bite detector from the bank stick or rod pod. It can also be appreciated that attachment and detachment of a fishing accessory, to and from a bank stick or rod pod, using a quick release coupling device does not require the first and second portions of the coupling device to be detached from the fishing accessory and bank stick or rod pod, respectively. The user may keep the first portion attached to the fishing accessory and the second portion attached to the bank stick or rod pod. Accordingly, the wear and tear of the attachment means of the fishing accessory and/or bank stick or rod pod is reduced when compared to direct attachment.

Although quick release coupling devices known in the art appear to overcome some limitations of direct attachment of fishing accessories to bank sticks or rod pods, they still have a number of drawbacks.

One disadvantage of quick release coupling devices known in the art is that they comprise many parts, for example, a plurality of ball bearings or pins, an actuator and one or more springs. The number of parts makes such quick release coupling devices complicated and expensive to manufacture.

Furthermore, the quick release coupling devices known in the art contain moving parts, such as springs and actuators. These moving parts are prone to wear and tear which reduces the lifespan of the quick release coupling devices.

An aim of the present invention is to produce a simpler, longer-lasting quick release coupling device for coupling fishing accessories to bank sticks or rod pods, which is, accordingly, cheaper to manufacture.

The present invention provides a magnetic quick release coupling device for coupling a fishing accessory, such as a fish bite detector, to a bank stick or rod pod. Similar to the quick release coupling devices known in the art, the present invention comprises a first and a second portion. The first and second portion of the coupling device are held together, when coupled, by a magnetic force of attraction between the portions. The first and second portions may be uncoupled by simply pulling the first portion from the second portion with sufficient force to overcome the magnetic force of attraction. No moving parts are involved in coupling or uncoupling the first and second portions and, in certain arrangements, only a single magnet is required for coupling. Accordingly, the quick release coupling device of the present invention is simpler to manufacture and longer-lasting than quick release coupling devices known in the art.

An important feature of quick release coupling devices, when used to couple fish bite detectors to bank sticks or rod pods, is that they must allow the fish bite detector to be attached in a fixed position. In other words, a quick release coupling device should ideally not allow movement, such as wobble or rotation, of the fish bite detector. It can be appreciated that if the fish bite detector is able to move, for example as a result of wind, the movement may trigger an unhelpful false fish bite alarm.

In general, when two objects are coupled magnetically, if sufficient force is applied, the objects may rotate relative to each other. Therefore, previously, magnetic coupling was not considered suitable for attachment of fishing accessories, such as fish bite detectors, to bank sticks or rod pods. According to the present invention, there is provided a means for preventing rotation of the two portions of the quick release coupling device relative to each other.

GB 2512843 A discloses a rod support for use by anglers comprising a plug and socket with respective magnets and a pin to prevent rotation of the plug and socket with respect to each other.

According to the present invention and as specified in independent claim 1, there is provided a quick release coupling device for use with a bank stick or rod pod, the coupling device comprising:
a first portion having a first end and a second end opposite the first end, wherein the first end comprises a means for attaching a fishing accessory such as a fish bite detector or has a fishing accessory integrally attached; and a second portion having a first end and a second end opposite the first end, wherein the first end of the second portion comprises a means for attachment to a bank stick or rod pod, wherein both the second end of the first portion and the second end of the second portion comprise a magnet, wherein the first and second portions are couplable via said magnets, or wherein the second end of one from the first portion and the second portion comprises a ferromagnetic material and the second end of the other from the first portion and second portion comprises a magnet, wherein the first and second portions are couplable via the attractive force between the magnetic second end and the magnet,
characterised in that the second end of one from the first portion and the second portion comprises a projection along a central axis passing through the first and second ends of said portion, wherein the second end of the other from the first portion and the second portion comprises a recess configured to receive the projection, and characterised in that the projection has a non-circular cross-section along a base section thereof or along an entire length thereof and the recess has a corresponding non-circular cross-section such that the first portion is not rotatable with respect to the second portion.

Preferably, both the second end of the first portion and the second end of the second portion comprise a magnet.

Advantageously, one from the second end of the first portion and the second end of the second portion further comprises a moveable collar, wherein the collar is moveable along the central axis passing through the first and the second end of the collar-comprising portion, and wherein movement of the collar adjusts the separation between the magnets, and thereby the strength of the attractive force between the magnets, when the first and second portions are coupled.

Conveniently, the collar is rotatable.

Preferably, the means for attaching a fishing accessory is selected from an internal screw thread, an external screw thread and a screw hole.

Advantageously, when means for attaching a fishing accessory is a screw hole, the first portion further comprises a screw.

Conveniently, the means for attaching a fishing accessory comprises an internal screw thread.

Preferably, the means for attachment to a bank stick or rod pod comprises a screw hole.

Advantageously, when the means for attachment to a bank stick or rod pod is a screw hole, the second portion further comprises a screw.

Conveniently, the means for attachment to a bank stick or rod pod comprises an external screw thread.

Preferably, the non-circular cross-section is a rectangular or square cross-section.

Advantageously, both the first portion and the second portion comprise an outer surface, wherein at least one from the outer surface of the first portion and the outer surface of the second portion comprises a grippable portion.

According to the present invention and as specified in independent claim 11, there is also provided a kit, the kit comprising:
at least one quick release coupling device according to the invention; and
at least one from:
   at least one bank stick or a rod pod; and
   at least one fishing accessory such as a fish bite detector, wherein each fishing accessory and bank stick is attachable to one from the at least one quick release coupling device, and wherein each rod pod is attachable to at least one from the at least one quick release coupling device.

The invention will now be described with reference to the attached drawings, in which:
FIGURE 1 is an exploded view of a quick release coupling device according to the present invention.
FIGURE 2 is cross sectional view of a quick release coupling device according to the present invention.
FIGURE 3 is a perspective view of a second portion of a quick release coupling device according to the present invention.

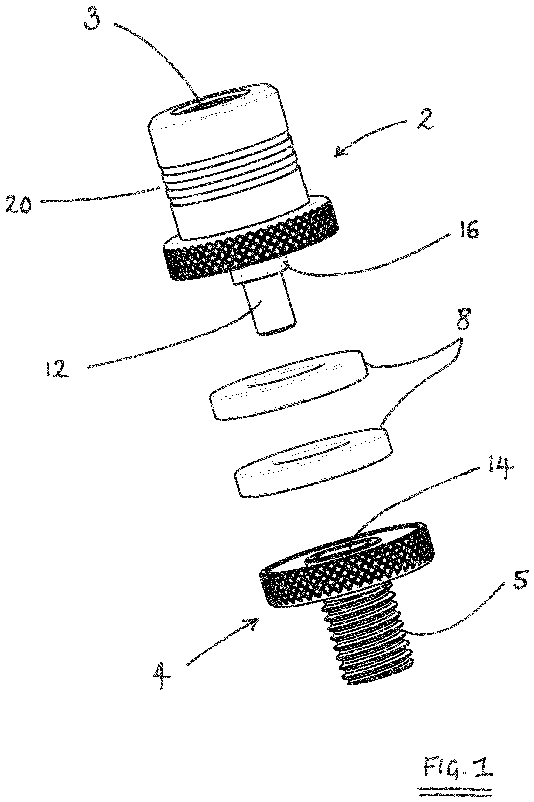

Figure 1 depicts generally a quick release coupling device according to the present invention. The device can be used to attach a fishing accessory, such as a fish bite detector, to a bank stick or rod pod.

As depicted, the device comprises a first portion 2 and a second portion 4. The first portion 2 comprises a first end having a means 3 for attaching a fishing accessory such as a fish bite detector. The second portion 4 also comprises a first end. The first end of the second portion 4 comprises a means 5 for attachment to a bank stick or rod pod.

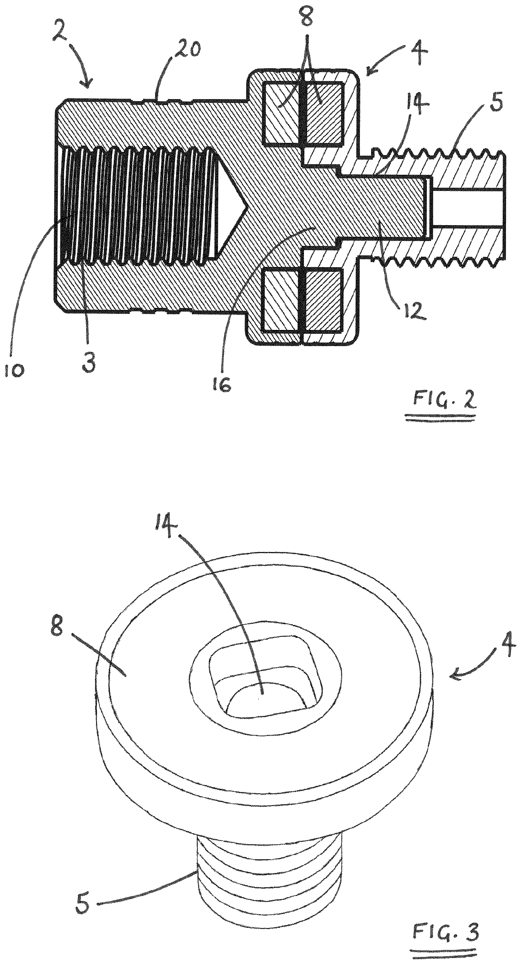

In the arrangement depicted in figures 1 and 2, the first portion 2 and the second portion 4 are couplable via a pair of magnets 8. Figure 1 shows an exploded view of a quick release coupling device according to the invention wherein the magnets 8 are drawn as separated from the first portion 2 and the second portion 4. As can be seen in figure 2, generally, a second end of the first portion 2, located opposite the first end of the first portion, comprises one of the magnets 8, while a second end of the second portion 4, located opposite the first end of the second portion, comprises the second of the magnets 8. As depicted, the magnets 8 may be seated in recesses formed in the second ends of the portions 2 and 4. The magnets 8 are arranged such that, when the first portion 2 and the second portion 4 of the coupling device are brought into proximity of each other, the attractive force between the two magnets results in the coupling of the first and second portions.

In the depicted arrangement, the magnets 8 are ring-shaped. In alternative arrangements of the invention the magnets 8 may have a different shape. For example, the magnets 8 may simply be disc-shaped.

It can be appreciated that, in alternative arrangements of the invention, the first portion 2 and the second portion 4 may be coupled using a single magnet 8. One from the second end of the first portion 2 and the second end of the second portion 4 may comprise a ferromagnetic material, such as iron, nickel or cobalt, while the other may comprise a magnet 8. The first portion 2 and second portion 4 may be coupled via the attractive force between the ferromagnetic second end and the magnet 8.

In both the two-magnet 8 and the single magnet arrangement, the first portion 2 and the second portion 4 may be uncoupled by pulling the first portion from the second portion with sufficient force to overcome the magnetic attraction between the two portions. As depicted in figures 1 and 2, the outer surface of at least one from the first portion 2 and the second portion 4 may comprise a grippable portion 20 to assist the user with uncoupling the first portion and the second portion. The grippable portion 20 may take a number of forms. For example, the grippable portion may be a textured surface, a series of ridges or at least one finger recess.

In arrangements of the invention comprising two magnets 8, one from the second end of the first portion 2 and the second end of the second portion 4 may additionally comprise a moveable collar, wherein the collar is manipulable by the user to adjust the distance between the magnets 8 when the first portion 2 and the second portion 4 are in coupled. The collar may be moveable along the central axis passing through the first and second ends of the collar-comprising portion of the quick release device. The collar may be moved into a position such that, when the first portion 2 and the second portion 4 of the quick release coupling device are brought into contact, the two magnets 8 are prevented from touching, but the first portion 2 and the second portion 4 are nevertheless held together by the force of attraction between the magnets. The collar may also be moved into another position wherein the two magnets 8 are able to touch when the first portion 2 and second portion 4 are brought into contact. In certain arrangements, the collar may be moved into more than one position, wherein the two magnets 8 are prevented from touching, the distance between the magnets in each of the more than one positions being different.

It can be appreciated that, when the two magnets 8 are brought into contact, the attractive force holding the two magnets together will be stronger than when the two magnets 8 are not in contact. It can also be appreciated that the greater the distance between the two magnets 8, the weaker the force of attraction holding the first portion 2 and the second portion 4 together. Accordingly, the collar may be used to adjust the strength of the coupling between the first portion 2 and the second portion 4 of the quick release coupling device and, thereby, how quickly and easily a fishing accessory attached to a bank stick or rod pod using the quick release coupling device may be detached from the bank stick or rod pod.

In a preferred arrangement of the invention, the collar is rotatable. The second end of the collar-comprising portion may comprise a helical thread on its outer surface and the collar may be configured to be engageable with the helical thread.

As depicted in figures 1 to 3, the means 5 for attachment to a bank stick or rod pod may comprise an external screw thread. In alternative arrangements, the second portion 4 may simply comprise a screw hole as a means 5 for attachment. In such arrangements, the device preferably further comprises a screw for screwing the second portion 4 into a bank stick or rod pod.
It can be appreciated that a variety of alternative means 5 for attachment may be used to attach the second portion 4 to a bank stick or rod pod. An external screw thread and a screw hole simply represent preferred arrangements of the invention. These arrangements are preferred because bank sticks and rod pods often comprise internal screw threads for the attachment of fishing accessories. A second portion 4 comprising a screw hole or external screw thread is therefore compatible with a large number of bank sticks and rod pods currently on the market. Different means 5 for attachment may be used for quick release coupling devices designed for use with banks sticks and rod pods not comprising internal screw threads.

As depicted in figures 1 and 2, the means 3 for attaching a fishing accessory to the first portion 2 of the quick release coupling device may comprise an internal screw thread. Figure 2 depicts a screw 10 from a fishing accessory screwed into the internal screw thread 3. In alternative arrangements, the first portion 2 may comprise an external screw thread or a screw hole as a means 3 for attaching a fishing accessory. In arrangements comprising a screw hole 3, the quick release coupling device preferably further comprises a screw for screwing the first portion 2 into a fishing accessory.

Similarly as explained for the means 5, a variety of alternative means 3 for attaching a fishing accessory may be used. An internal screw thread simply represents a preferred arrangement of the invention. This arrangement is preferred because fishing accessories for attachment to bank sticks or rod pods often comprise screw holes or external screw threads for direct attachment to commonly available bank sticks or rod pods. A first portion 2 comprising an internal screw thread is therefore compatible with a large number of fishing accessories currently on the market. Different means 3 may be used for quick release coupling devices designed for attaching fishing accessories not comprising screw holes or external screw threads. For example, the means 3 may comprise a snap fit.

As depicted in figures 1 and 2, the second end of the first portion 2 comprises according to the invention a projection 12 and the second end of the second portion 4 comprises a recess 14 for receiving the projection when the first and second portions are coupled. It can be appreciated that, in alternative arrangements of the invention, the second end of the second portion 4 comprises a projection 12 and the second end of the first portion 2 comprises a recess 14 for receiving the projection when the first and second portions are coupled.

The projection 12 and recess 14 are shaped and configured so as to prevent rotation of the first portion 2 relative to the second portion 4 when the first and second portions are coupled, i.e. the projection 12 and recess 14 are configured such that the projection is not rotatable with respect to the recess. In figure 1, it can be seen that the projection 12 comprises a base section 16 having a substantially rectangular or square cross section. In figure 3, it can be seen that the recess 14 comprises a region of substantially rectangular or square cross section for receiving the base section 16 of projection 12. The non-circular cross-sectional shape of the base section 16 prevents rotation of the first portion 2 relative to the second portion 4 when the first and second portions 2 and 4 are coupled.

It can be appreciated that, in alternative arrangements of the invention, projection 12 has a substantially rectangular or square cross section along its entire length. It can also be appreciated that other non-circular cross-sectional shapes for projection 12, such as a triangle, would prevent rotation of the first portion 2 relative to the second portion 4 and are therefore envisaged.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination, be utilised for realising the invention in diverse forms thereof.

## Claims

1. A quick release coupling device for use with a bank stick or rod pod, the coupling device comprising:
a first portion (2) having a first end and a second end opposite the first end, wherein the first end comprises a means (3) for attaching a fishing accessory such as a fish bite detector or has a fishing accessory integrally attached; and
a second portion (4) having a first end and a second end opposite the first end, wherein the first end of the second portion comprises a means (5) for attachment to a bank stick or rod pod,
wherein both the second end of the first portion and the second end of the second portion comprise a magnet (8), wherein the first and second portions are couplable via said magnets,
or wherein the second end of one from the first portion and the second portion comprises a ferromagnetic material and the second end of the other from the first portion and second portion comprises a magnet, wherein the first and second portions are couplable via the attractive force between the magnetic second end and the magnet,
**characterised in that** the second end of one from the first portion and the second portion comprises a projection (12) along a central axis passing through both the first and second ends of said portion, wherein the second end of the other from the first portion and the second portion comprises a recess (14) configured to receive the projection,
and **in that** the projection has a non-circular cross-section along a base section thereof or along an entire length thereof and the recess has a corresponding non-circular cross-section such that the first portion is not rotatable with respect to the second portion.

2. The device of claim 1, wherein both the second end of the first portion and the second end of the second portion comprise a magnet.

3. The device of claim 2, wherein one from the second end of the first portion and the second end of the second portion further comprises a moveable collar, wherein the collar is moveable along the central axis passing through the first and the second end of the collar-comprising portion, and wherein movement of the collar adjusts the separation between the magnets, and thereby the strength of the attractive force between the magnets, when the first and second portions are coupled.

4. The device of claim 3, wherein the collar is rotatable.

5. The device of any preceding claim, wherein the means (3) for attaching a fishing accessory is selected from an internal screw thread, an external screw thread and a screw hole, and preferably wherein, when means for attaching a fishing accessory is a screw hole, the first portion further comprises a screw (10).

6. The device of claim 5, wherein the means for attaching a fishing accessory comprises an internal screw thread.

7. The device of any preceding claim, wherein the means for attachment to a bank stick or rod pod comprises a screw hole and preferably wherein the second portion further comprises a screw.

8. The device of any of claims 1 to 6, wherein the means for attachment to a bank stick or rod pod comprises an external screw thread.

9. The device of any preceding claim, wherein the non-circular cross-section is a rectangular or square cross-section.

10. The device of any preceding claim, wherein both the first portion and the second portion comprise an outer surface, and wherein at least one from the outer surface of the first portion and the outer surface of the second portion comprises a grippable portion.

11. A kit, the kit comprising:
at least one quick release coupling device of any of the preceding claims; and
at least one from:
at least one bank stick or a rod pod; and
at least one fishing accessory such as a fish bite detector,
wherein each fishing accessory and bank stick is attachable to one from the at least one quick release coupling device, and wherein each rod pod is attachable to at least one from the at least one quick release coupling device.

## Patentansprüche

1. Schnellkopplungsvorrichtung zur Verwendung mit einem Rutenhalter oder einer Rutenauflage, wobei die Kopplungsvorrichtung umfasst:
einen ersten Abschnitt (2), der ein erstes Ende und ein zweites Ende gegenüber dem ersten Ende aufweist, wobei das erste Ende ein Mittel (3) zum Befestigen eines Fischereizubehörs, wie etwa eines Fischbissanzeigers umfasst, oder ein einstückig befestigtes Fischereizubehör aufweist; und
einen zweiten Abschnitt (4), der ein erstes Ende und ein zweites Ende gegenüber dem ersten Ende aufweist, wobei das erste Ende des zweiten Abschnitts ein Mittel (5) für die Befestigung an einem Rutenhalter oder einer Rutenauflage umfasst, wobei sowohl das zweite Ende des ersten Abschnitts als auch das zweite Ende des zweiten Abschnitts einen Magneten (8) umfassen,
wobei der erste und der zweite Abschnitt über die Magnete koppelbar sind, oder wobei das zweite Ende eines von dem ersten Abschnitt und dem zweiten Abschnitt ein ferromagnetisches Material umfasst und das zweite Ende des anderen von dem ersten Abschnitt und dem zweiten Abschnitt einen Magneten umfasst, wobei der erste und der zweite Abschnitt über die Anziehungskraft zwischen dem magnetischen zweiten Ende und dem Magneten koppelbar sind,
**dadurch gekennzeichnet, dass** das zweite Ende eines von dem ersten Abschnitt und dem zweiten Abschnitt einen Überstand (12) entlang einer Mittelachse, die sowohl durch das erste als auch das zweite Ende des Abschnitts verläuft, umfasst, wobei das zweite Ende des anderen von dem ersten Abschnitt und dem zweiten Abschnitt eine Aussparung (14), die konfiguriert ist, um den Überstand aufzunehmen, umfasst,
und, dass der Überstand einen nicht kreisförmigen Querschnitt entlang eines Basisbereichs davon oder entlang einer gesamten Länge davon aufweist und die Aussparung einen entsprechenden nicht kreisförmigen Querschnitt derart aufweist, dass der erste Abschnitt hinsichtlich des zweiten Abschnitts nicht drehbar ist.

2. Vorrichtung nach Anspruch 1, wobei sowohl das zweite Ende des ersten Abschnitts als auch das zweite Ende des zweiten Abschnitts einen Magneten umfassen.

3. Vorrichtung nach Anspruch 2, wobei eines von dem zweiten Ende des ersten Abschnitts und dem zweiten Ende des zweiten Abschnitts ferner einen beweglichen Ring umfasst, wobei der Ring entlang der Mittelachse, die durch das erste und das zweite Ende des Ring-umfassenden Abschnitts verläuft, beweglich ist, und wobei die Bewegung des Rings den Abstand zwischen den Magneten und dadurch die Stärke der Anziehungskraft zwischen den Magneten einstellt, wenn der erste und der zweite Abschnitt gekoppelt sind.

4. Vorrichtung nach Anspruch 3, wobei der Ring drehbar ist.

5. Vorrichtung nach einem der vorhergehenden Ansprüche, wobei das Mittel (3) zum Befestigen eines Fischereizubehörs aus einem Innengewinde, einem Außengewinde und einem Schraubenloch ausgewählt ist und vorzugsweise wobei, wenn das Mittel zum Befestigen eines Fischereizubehörs ein Schraubenloch ist, der erste Abschnitt ferner eine Schraube (10) umfasst.

6. Vorrichtung nach Anspruch 5, wobei das Mittel zum Befestigen eines Fischereizubehörs ein Innengewinde umfasst.

7. Vorrichtung nach einem der vorhergehenden Ansprüche, wobei das Mittel zum Befestigen an einem Rutenhalter oder einer Rutenauflage ein Schraubenloch umfasst und vorzugsweise wobei der zweite Abschnitt ferner eine Schraube umfasst.

8. Vorrichtung nach einem der Ansprüche 1 bis 6, wobei das Mittel zum Befestigen an einem Rutenhalter oder einer Rutenauflage ein externes Schraubengewinde umfasst.

9. Vorrichtung nach einem der vorhergehenden Ansprüche, wobei der nicht kreisförmige Querschnitt ein rechteckiger oder ein quadratischer Querschnitt ist.

10. Vorrichtung nach einem der vorhergehenden Ansprüche, wobei sowohl der erste Abschnitt als auch der zweite Abschnitt eine Außenoberfläche umfassen und wobei wenigstens eine von der Außenoberfläche des ersten Abschnitts und der Außenoberfläche des zweiten Abschnitts einen greifbaren Abschnitt umfasst.

11. Kit, wobei das Kit umfasst:
wenigstens eine Schnellkopplungsvorrichtung nach einem der vorhergehenden Ansprüche; und
wenigstens eine von:
wenigstens einen Rutenhalter oder eine Rutenauflage; und
wenigstens ein Fischereizubehör wie etwa einen Fischbissanzeiger, wobei jedes Fischereizubehör und jeder Rutenhalter an einer von der wenigstens einen Schnellkopplungsvorrichtung befestigt werden kann und wobei jede Rutenauflage an wenigstens einer von der wenigstens einen Schnellkopplungsvorrichtung befestigt werden kann.

## Revendications

1. Dispositif d'accouplement à dégagement rapide destiné à être utilisé avec un support de cannes ou un trépied, le dispositif d'accouplement comprenant :
une première partie (2) ayant une première extrémité et une seconde extrémité opposée à la première extrémité, la première extrémité comprenant un moyen (3) pour fixer un accessoire de pêche tel qu'un détecteur de touche ou ayant un accessoire de pêche fixé d'une seule pièce ; et
une seconde partie (4) ayant une première extrémité et une seconde extrémité opposée à la première extrémité, la première extrémité de la seconde partie comprenant un moyen (5) de fixation à un support de cannes ou un trépied,
à la fois la seconde extrémité de la première partie et la seconde extrémité de la seconde partie comprenant un aimant (8), les première et seconde parties pouvant être accouplées par le biais desdits aimants, ou la seconde extrémité de l'une de la première partie et de la seconde partie comprenant un matériau ferromagnétique et la seconde extrémité de l'autre de la première partie et la seconde partie comprenant un aimant, les première et seconde parties pouvant être accouplées par le biais de la force d'attraction entre la seconde extrémité magnétique et l'aimant,
**caractérisé en ce que**
la seconde extrémité de l'une de la première partie et de la seconde partie comprend une projection (12) le long d'un axe central passant à travers les première et seconde extrémités de ladite partie, la seconde extrémité de l'autre de la première partie et de la seconde partie comprenant un évidement (14) conçu pour recevoir la projection,
et **en ce que** la projection a une section transversale non circulaire le long d'une section de base de celle-ci ou sur toute sa longueur et l'évidement a une section transversale non circulaire correspondante de telle sorte que la première partie ne peut pas pivoter par rapport à la seconde partie.

2. Dispositif selon la revendication 1, dans lequel à la fois la seconde extrémité de la première partie et la seconde extrémité de la seconde partie comprennent un aimant.

3. Dispositif selon la revendication 2, dans lequel l'une de la seconde extrémité de la première partie et de la seconde extrémité de la seconde partie comprend en outre un collier mobile, dans lequel le collier est mobile le long de l'axe central passant à travers la première et la seconde extrémité de la partie comprenant le collier, et dans lequel le mouvement du collier ajuste la séparation entre les aimants, et ainsi la force de la force d'attraction entre les aimants, lorsque les première et seconde parties sont accouplées.

4. Dispositif selon la revendication 3, dans lequel le collier est pivotable.

5. Dispositif selon l'une quelconque des revendications précédentes, dans lequel le moyen (3) pour fixer un accessoire de pêche est choisi parmi un filetage de vis interne, un filetage de vis externe et un trou de vis, et de préférence, lorsque le moyen pour fixer un accessoire de pêche est un trou de vis, la première partie comprenant en outre une vis (10).

6. Dispositif selon la revendication 5, dans lequel le moyen pour fixer un accessoire de pêche comprend un filetage de vis interne.

7. Dispositif selon l'une quelconque des revendications précédentes, dans lequel le moyen de fixation à un support de cannes ou à un trépied comprend un trou de vis et de préférence la seconde partie comprenant en outre une vis.

8. Dispositif selon l'une quelconque des revendications 1 à 6, dans lequel le moyen de fixation à un support de cannes ou à un trépied comprend un filetage de vis externe.

9. Dispositif selon l'une quelconque des revendications précédentes, dans lequel la section transversale non circulaire est une section transversale rectangulaire ou carrée.

10. Dispositif selon l'une quelconque des revendications précédentes, dans lequel à la fois la première partie et la seconde partie comprennent une surface externe, et dans lequel au moins l'une de la surface externe de la première partie et de la surface externe de la seconde partie comprend une partie pouvant être saisie.

11. Kit, le kit comprenant :
au moins un dispositif d'accouplement à dégagement rapide selon l'une quelconque des revendications précédentes ; et
au moins l'un parmi :
au moins un support de cannes ou un trépied ; et
au moins un accessoire de pêche tel qu'un détecteur de touche, chaque accessoire de pêche et support de cannes pouvant être fixé à l'un de l'au moins un dispositif d'accouplement à dégagement rapide, et chaque trépied pouvant être fixé à l'au moins un de l'au moins un dispositif d'accouplement à dégagement rapide.
